# EUROPEAN PATENT SPECIFICATION

(11) **EP 2 310 429 B1**
(45) Date of publication and mention of the grant of the patent: **19.09.2012**
(21) Application number: 09791275.2
(22) Date of filing: 07.08.2009
(51) Int. Cl.: C08F 214/26

(54) **NON-MELT-FLOWABLE PERFLUOROPOLYMER COMPRISING REPEATING UNITS ARISING FROM TETRAFLUOROETHYLENE AND A MONOMER HAVING A FUNCTIONAL GROUP AND A POLYMERIZABLE CARBON-CARBON DOUBLE BOND**
NICHT SCHMELZ- UND FLIESSFÄHIGES PERFLUORPOLYMER MIT MEHREREN EINHEITEN AUS TETRAFLUORETHYLEN UND EINEM MONOMER MIT EINER FUNKTIONELLEN GRUPPE UND EINER POLYMERISIERBAREN KOHLENSTOFF-KOHLENSTOFF-DOPPELBINDUNG
PERFLUOROMONOMÈRE NE POUVANT PAS S'ÉCOULER À L'ÉTAT FONDU COMPORTANT DES UNITÉS SE RÉPÉTANT PROVENANT D'UN TÉTRAFLUOROÉTHYLÈNE ET D'UN MONOMÈRE AYANT UN GROUPE FONCTIONNEL ET UNE DOUBLE LIAISON CARBONE-CARBONE POLYMÉRISABLE

(30) Priority: 08.08.2008 US 87395 P
(43) Date of publication of application: 20.04.2011
(73) Proprietor: E. I. du Pont de Nemours and Company, Wilmington, DE 19898 (US)
(72) Inventor: ATEN, Ralph, Munson, Chadds Ford PA 19317 (US); LIBERT, Sharon, Ann, Hockessin DE 19707 (US)
(74) Representative: Matthews, Derek Peter
(86) International application number: PCT/US2009/053112
(87) International publication number: WO 2010/017455

(56) References cited:
- EP-A1- 1 533 325
- EP-A1- 1 947 144
- US-A- 3 250 806
- US-A- 4 837 267
- US-A- 5 064 594

## Description

### FIELD OF THE DISCLOSURE

This disclosure relates in general to non-melt-flowable perfluoropolymers.

### BACKGROUND

Fluorine containing polymers are important commercial products due to their low surface energy and high thermal and chemical resistance. High molecular weight tetrafluoroethylene homopolymer (PTFE) finds use in gaskets, bearings, tape, electrical insulation, and liners for pipes, valves and reactors. However, the low surface energy of PTFE leads to poor adhesion to substrates.

Certain functional groups are known to modify the adhesive properties of partially fluorinated polymers. Incorporation of such groups during polymerization of partially fluorinated polymers without significantly sacrificing desirable polymer properties has been met with limited success to date. Monomers containing functional groups may not copolymerize with fluorinated monomers or may cause other undesirable effects in a copolymerization. Further, incorporation of monomers containing functional groups can adversely affect the thermal stability or chemical resistance of the resulting polymer.

The art is silent as to PTFE having functional groups that allow for adhesion to substrates while retaining the desirable PTFE properties of chemical resistance and thermal stability.

### SUMMARY

A non-melt-flowable perfluoropolymer is taught herein that contains functional groups that allow for adhesion to substrates while retaining chemical resistance and thermal stability.

Described herein is a non-melt-flowable perfluoropolymer comprising repeating units arising from: (a) tetrafluoroethylene; and (b) a monomer having at least one functional group and a polymerizable carbon-carbon double bond.

In an embodiment, the non-melt-flowable perfluoropolymer contains about 1 weight percent or less of repeating units arising from the monomer having at least one functional group and a polymerizable carbon-carbon double bond. In another embodiment, the functional group is at least one selected from the group consisting of amine, amide, carboxyl, hydroxyl, phosphonate, sulfonate, nitrile, boronate and epoxide. In another embodiment, the functional group is a dicarboxylic acid anhydride.

In another embodiment, the non-melt-flowable perfluoropolymer further comprises about 1 weight percent or less of repeating units arising from a perfluoromonomer other than tetrafluoroethylene. In another embodiment, the perfluoromonomer other than tetrafluoroethylene is at least one selected from the group consisting of chlorotrifluoroethylene (CTFE), hexafluoropropylene (HFP), perfluoro-2,2-dimethyl-1,3-dioxole (PDD), perfluoro-2-methylene-4-methyl- 1,3-dioxolane (PMD), perfluoro(methyl vinyl ether) (PMVE), perfluoro(ethyl vinyl ether) (PEVE), perfluoro(propyl vinyl ether) (PPVE), and perfluoro(butyl vinyl ether) (PBVE).

In another embodiment, the non-melt flowable perfluoropolymer has a standard specific gravity (SSG) of 2.14 to 2.30.

In another embodiment, the non-melt flowable perfluoropolymer is paste extruded with lubricant to form a film.

In another embodiment, the non-melt flowable perfluoropolymer is compression molded and sintered to form a billet. The foregoing general description and the following detailed description are exemplary and explanatory only and are not restrictive of the invention, as defined in the appended claims.

### DETAILED DESCRIPTION

Embodiments described above are merely exemplary and not limiting. After reading this specification, skilled artisans appreciate that other aspects and embodiments are possible without departing from the scope of the invention.

Other features and benefits of any one or more of the embodiments will be apparent from the following detailed description, and from the claims. The detailed description addresses:
1. Definitions and Clarification of Terms:
2. FG-Perfluoropolymer
3. Monomer Having a Functional Group and a Polymerizable Carbon-Carbon Double Bond (FG),
4. Perfluoromonomer other than Tetrafluoroethylene
5. Standard Specific Gravity of the FG-Perfluoropolymer
6. Process for the Manufacture of the FG-Perfluoropolymer, and Examples.

### 1. DEFINITIONS AND CLARIFICATION OF TERMS

Before addressing further details of these embodiments, some terms are defined or clarified.

By "non-melt-flowable" is meant that the perfluoropolymer has such a high melt viscosity that it does not flow in the molten state and therefore cannot be manipulated in the molten state.

As used herein, the terms "comprises," "comprising," "includes," "including," "has," "having" or any other variation thereof, are intended to cover a non-exclusive inclusion. For example, a process, method, article, or apparatus that comprises a list of elements is not necessarily limited to only those elements but may include other elements not expressly listed or inherent to such process, method, article, or apparatus. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

Also, use of "a" or "an" are employed to describe elements and components described herein. This is done merely for convenience and to give a general sense of the scope of the invention. This description should be read to include one or at least one and the singular also includes the plural unless it is obvious that it is meant otherwise.

Unless otherwise defined, all technical and scientific terms used herein have the same meaning as commonly understood by one of ordinary skill in the art to which the claims belong. Although methods and materials similar or equivalent to those described herein can be used in the practice or testing of the embodiments disclosed, suitable methods and materials are described below. In case of conflict, the present specification, including definitions, will control. In addition, the materials, methods, and examples are illustrative only and not intended to be limiting.

To the extent not described herein, many details regarding specific materials and processing acts are conventional and may be found in textbooks and other sources within the perfluoropolymer art.

### 2. FG-PERFLUOROPOLYMER

Described herein is a non-melt-flowable perfluoropolymer comprising repeating units arising from: (a) tetrafluoroethylene; and (b) a monomer having at least one functional group and a polymerizable carbon-carbon double bond. Such perfluoropolymer is alternately referred to herein as "FG-perfluoropolymer."

The claimed FG-perfluoropolymer has been discovered to have a sufficient concentration of functional groups that allow for adhesion of the FG-perfluoropolymer to substrates such as metals, inorganics and functional group containing polymers. Surprisingly, this concentration of functional groups does not lead to a decrease in the desirable perfluoropolymer properties, such as chemical resistance and thermal stability.

FG-perfluoropolymer can be adhered to such substrates by known methods such as thermal lamination.

FG-perfluoropolymer cannot be fabricated by the typical melt fabrication methods of extrusion and injection molding, which involve both shear and melt flow. Instead, FG-perfluoropolymer can be fabricated by non-melt flow processes such as paste extrusion of an FG-perfluoropolymer/organic lubricant mixture at a temperature typically between 15°C and 150°C, followed by sintering to coalesce the FG-perfluoropolymer particles into a molded article.

In another embodiment, FG-perfluoropolymer can be paste extruded onto the surface of a wire to form an FG-perfluoropolymer coated wire. In another embodiment, FG-perfluoropolymer can be paste extruded onto the surface of a tubular shaped article formed of another material. In another embodiment, FG-perfluoropolymer can be paste extruded as a film and then thermally laminated to another material.

### 3. MONOMER HAVING A FUNCTIONAL GROUP AND A POLYMERIZABLE CARBON-CARBON DOUBLE BOND (FG)

### 3.1. CONSTITUTION OF THE FUNCTIONAL GROUP MONOMER

The present non-melt-flowable perfluoropolymer has repeating units arising from a monomer having at least one functional group and a polymerizable carbon-carbon double bond. Monomer having at least one functional group and a polymerizable carbon-carbon double bond is alternately referred to herein as "functional group monomer" or "FG". The polymerizable carbon-carbon double bond functions to allow repeating units arising from the functional group monomer to be incorporated into the perfluoropolymer carbon-carbon chain backbone arising from polymerized units of tetrafluoroethylene. The functional group functions to increase the adhesion of a perfluoropolymer with a given substrate with which it is in contact. This results, for example, in adhesion between a layer of FG-perfluoropolymer and a layer of polyamide. Polyamide and perfluoropolymer containing no FG normally have no adhesion to one another.

Functional group monomer is not structurally limited, and generally includes compounds having a functional group and a polymerizable carbon-carbon double bond that meet the aforementioned criteria. In an embodiment, functional group monomer comprises the elements carbon, hydrogen and oxygen. In another embodiment, functional group monomer comprises the elements carbon, hydrogen and oxygen and further comprises elements selected from the group consisting of fluorine, nitrogen, phosphorus, sulfur and boron. In another embodiment, all monovalent atoms in the functional group monomer are hydrogen. In another embodiment, all monovalent atoms in the functional group monomer are fluorine.

Functional groups of utility are not limited, provided that the functional group results in an increase in the adhesion of FG-perfluoropolymer with a given substrate with which it is in contact. Generally, functional groups comprise at least one selected from the group consisting of amine, amide, carboxyl, hydroxyl, phosphonate, sulfonate, nitrile, boronate and epoxide.

In another embodiment, FG contains a carboxyl group (-C(=O)O-) and a polymerizable carbon-carbon double bond. In another embodiment, FG contains a dicarboxylic acid anhydride group (-C(=O)OC(=O)-) and a polymerizable double bond. In another embodiment, FG contains a dicarboxylic acid group capable of forming a cyclic dicarboxylic acid anhydride and a polymerizable carbon-carbon double bond. In another embodiment, FG contains a 1,2- or 1,3-dicarboxylic acid group and a polymerizable carbon-carbon double bond. In another embodiment, FG includes C₄ to C₁₀ dicarboxylic acids and dicarboxylic acid anhydrides containing a polymerizable carbon-carbon double bond. Example FG containing a carboxyl group include: maleic anhydride, maleic acid, fumaric acid, itaconic anhydride, itaconic acid, citraconic anhydride, citraconic acid, mesaconic acid, 5-norbornene-2,3-dicarboxylic anhydride and 5-norbornene-2,3-dicarboxylic acid.

In another embodiment, FG contains an amine group and a polymerizable carbon-carbon double bond. Examples include aminoethyl acrylate, dimethylaminoethyl methacrylate, dimethylaminoethyl acrylate, aminoethyl vinyl ether, dimethylaminoethyl vinyl ether and vinyl aminoacetate.

In another embodiment, FG contains an amide group and a polymerizable carbon-carbon double bond. Examples include N-methyl-N-vinyl acetamide, acrylamide and N-vinylformamide.

In another embodiment, FG contains an hydroxyl group and a polymerizable carbon-carbon double bond. Examples include 2-hydroxyethyl vinyl ether and omega-hydroxybutyl vinyl ether.

In another embodiment, FG contains a phosphonate group and a polymerizable carbon-carbon double bond. An example is diethylvinyl phosphonate.

In another embodiment, FG contains a sulfonate group and a polymerizable carbon-carbon double bond. An example is ammonium vinyl sulfonate.

In another embodiment, FG contains a nitrile group and a polymerizable carbon-carbon double bond. An example is acrylonitrile.

In another embodiment, FG contains a boronate group and a polymerizable carbon-carbon double bond. Examples include vinyl boronic acid dibutyl ester, 4-vinyl phenyl boronic acid and 4-bentenyl boronic acid.

In another embodiment, FG contains an epoxide group and a polymerizable carbon-carbon double bond. An example is allyl glycidal ether (AGE).

### 3.2. AMOUNT OF REPEATING UNITS ARISING FROM FUNCTIONAL GROUP MONOMER IN THE FG-PERFLUOROPOLYMER

The amount of repeating units arising from FG in the present FG-perfluoropolymer can be no more than the maximum amount that results in the FG-perfluoropolymer being non-melt-flowable.

In another embodiment, FG-perfluoropolymer comprises 0.001 to 0.01 weight percent of repeating units arising from FG. The weight percent of repeating units arising from FG referred to here is relative to the sum of the weight of repeating units arising from FG, tetrafluoroethlyene, and any perfluoromonomer other than tetrafluoroethlyene (modifier) in the FG-perfluoropolymer.

### 4. PERFLUOROMONOMER OTHER THAN TETRAFLUOROETHYLENE

### 4.1. CONSTITUTION OF THE PERFLUOROMONOMER OTHER THAN TETRAFLUOROETHYLENE

In one embodiment the present non-melt-flowable perfluoropolymer comprises repeating units arising from a perfluoromonomer other than tetrafluoroethylene. Perfluoromonomer other than tetrafluoroethylene (also referred to herein as "modifier") comprises compounds containing the elements carbon and fluorine and carbon-carbon unsaturation. All monovalent atoms bonded to carbon in the modifier are fluorine. In another embodiment, modifier further contains heteroatoms selected from the group consisting of oxygen, sulfur and nitrogen.

In another embodiment, modifiers of utility include perfluoroalkenes and perfluorinated vinyl ethers having 2 to 8 carbon atoms. In another embodiment, perfluorinated vinyl ethers are represented by the formula CF₂=CFOR or CF₂=CFOR'OR, wherein R is perfluorinated linear or branched alkyl groups containing 1 to 5 carbon atoms, and R' is perfluorinated linear or branched alkylene groups containing 1 to 5 carbon atoms. In another embodiment, R groups contain 1 to 4 carbon atoms. In another embodiment, R' groups contain 2 to 4 carbon atoms.

Example modifiers include hexafluoropropylene (HFP), perfluoro-2,2-dimethyl-1,3-dioxole (PDD), perfluoro-2-methylene-4-methyl-1,3-dioxolane (PMD) and perfluoro(alkyl vinyl ethers) (PAVE) such as perfluoro(methyl vinyl ether) (PMVE), perfluoro(ethyl vinyl ether) (PEVE), perfluoro(propyl vinyl ether) (PPVE), and perfluoro(butyl vinyl ether) (PBVE).

### 4.2. AMOUNT OF REPEATING UNITS ARISING FROM PERFLUOROMONOMER OTHER THAN TETRAFLUOROETHYLENE IN THE FG-PERFLUOROPOLYMER

The amount of repeating units arising from modifier in the present FG-perfluoropolymer can be no more than the maximum amount that results in the FG-perfluoropolymer being non-melt-flowable

In another embodiment, FG-perfluoropolymer comprises about 1 weight percent or less of repeating units arising from modifier. In another embodiment, FG-perfluoropolymer comprises 0.001 to 1 weight percent of repeating units arising from modifier. In another embodiment, FG-perfluoropolymer comprises 0.001 to 0.5 weight percent of repeating units arising from modifier. In another embodiment, FG-perfluoropolymer comprises 0.001 to 0.3 weight percent of repeating units arising from modifier. In another embodiment, FG-perfluoropolymer comprises 0.001 to 0.1 weight percent of repeating units arising from modifier. In another embodiment, FG-perfluoropolymer comprises 0.001 to 0.01 weight percent of repeating units arising from modifier. The weight percent of repeating units arising from modifier referred to here is relative to the sum of the weight of repeating units arising from FG, tetrafluoroethlyene, and modifier.

### 5. STANDARD SPECIFIC GRAVITY (SSG) OF THE FG-PERFLUOROPOLYMER

Standard specific gravity (SSG) is a method of indirectly measuring the molecular weight of a tetrafluoroethylene polymer. Generally, the lower the SSG, the higher the molecular weight. It is determined by the ratio of weight in air to weight of an equal volume of water at 23°C of a specimen prepared in a standard manner. A method for measuring the SSG for the present FG-perfluoropolymer is described in ASTM methods D4894 or D4895.

In another embodiment, the FG-perfluoropolymer has a SSG of 2.14 to 2.30.

### 6. PROCESS FOR THE MANUFACTURE OF THE FG-PERFLUOROPOLYMER

The present FG-perfluoropolymer can be manufactured by an aqueous polymerization process, comprising:
(A) combining water and tetrafluoroethylene to form a reaction mixture;
(B) initiating polymerization of the tetrafluoroethylene;
(C) polymerizing a portion of the tetrafluoroethylene to form particles of polymerized tetrafluoroethylene in the reaction mixture;
(D) adding to the reaction mixture a monomer having a functional group and a polymerizable carbon-carbon double bond (FG); and
(E) polymerizing the tetrafluoroethylene and the FG in the presence of the particles of polymerized tetrafluoroethylene to form the FG-fluoropolymer.

### 6.1. COMBINING WATER AND TETRAFLUOROETHYLENE TO FORM A REACTION MIXTURE (A)

The process involves (A) combining water and a tetrafluoroethylene to form a reaction mixture.

### 6.1.1. SURFACTANT

In an embodiment, surfactant is further added to the reaction mixture and the reaction mixture comprises an aqueous dispersion. Surfactants generally suitable for use in dispersion polymerization of tetrafluoroethylene copolymers are of utility. Such surfactants include, for example, ammonium perfluorooctanoate, ammonium perfluorononanoate, and perfluoroalkyl ethane sulfonic acids and salts thereof.

### 6.1.2 CHAIN TRANSFER AGENT

In an embodiment, chain transfer agent (CTA) is further added to the reaction mixture. A wide range of compounds can be used as CTA. Such compounds include, for example, hydrogen-containing compounds such as molecular hydrogen, the lower alkanes, and lower alkanes substituted with halogen atoms. The chain transfer activity of such compounds when used in the present process can result in FG-perfluoropolymer having -CF₂H end groups. The CTA can contribute other end groups, depending on the identity of the CTA. Example CTAs include methane, ethane, and substituted hydrocarbons such as methyl chloride, methylene chloride, chloroform, and carbon tetrachloride. The amount of CTA used to achieve desired molecular weight will depend, for given polymerization conditions, on the amount of initiator used and on the chain transfer efficiency of the chosen CTA. Chain transfer efficiency can vary substantially from compound to compound, and varies with temperature. The amount of CTA needed to obtain a desired polymerization result can be determined by one of ordinary skill in this field without undue experimentation

### 6.2. INITIATING POLYMERIZATION OF THE TETRAFLUOROETHYLENE (B)

The process involves (B) initiating polymerization of the tetrafluoroethylene.

Following (A), in which water and tetrafluoroethylene, as well as optional components (e.g., surfactant, CTA) are combined to form a reaction mixture, the reaction mixture is optionally heated to a chosen temperature, and then agitation is started. Initiator is then added at a desired rate to initiate polymerization of the tetrafluoroethylene.

Tetrafluoroethylene addition is started and controlled according to the scheme chosen to regulate the polymerization. An initiator, which can be the same as or different from the initiator first used to initiate polymerization, is usually added throughout the polymerization process.

### 6.2.1 INITIATOR

Initiators of utility in the present process are those commonly employed in emulsion (dispersion) polymerization of tetrafluoroethylene homopolymers. Initiators include, for example, water-soluble free-radical initiators such as ammonium persulfate (APS), potassium persulfate (KPS) and disuccinic acid peroxide, or redox systems such as those based on potassium permanganate. The amount of initiator used depends on the amount of chain-transfer agent (CTA) used. For APS and KPS for which initiation efficiency approaches 100% at high temperature (e.g. 100°C), the amount of initiator, relative to the amount of FG-perfluoropolymer formed, is generally less than 0.1 mol/mol, desirably no more than 0.05 mol/mol, and preferably no more than 0.01 mol/mol. When the initiator has lower initiation efficiency, such as APS or KPS at lower temperature, these initiator amounts refer to the proportion of polymer molecules initiated (made) by the initiator. Both situations can be described in terms of effective initiator amount per mole of polymer made.

### 6.2.2 TEMPERATURE

In the embodiment where the aqueous polymerization process comprises aqueous dispersion polymerization, a broad range of temperatures are of utility. Because of heat transfer considerations and the use of thermally activated initiators, higher temperatures are advantageous, such as temperatures in the range of 50-100°C. In another embodiment, temperature in the range 70-90°C is used. Surfactants used in emulsion polymerization appear to be less effective at temperatures above 103-108°C as there is a tendency to lose dispersion stability.

### 6.2.3. PRESSURE

Any workable pressure can be used in the polymerization process. High pressure offers an advantage over low pressure in increased reaction rate. However, the polymerization of tetrafluoroethylene is highly exothermic, so high reaction rate increases the heat that must be removed or accommodated as temperature increases. Pressures that can be used are also determined by equipment design and by safety concerns in the handling of tetrafluoroethylene. In an embodiment, pressures in the range of about 0.3-7 MPa are used. In another embodiment, pressures in the range 0.7-3.5 MPa are used. While it is common to maintain constant pressure in the reactor, in another embodiment, pressure can be varied.

### 6.3. POLYMERIZING A PORTION OF THE TETRAFLUOROETHYLENE TO FORM PARTICLES OF POLYMERIZED TETRAFLUOROETHYLENE (C)

The process involves a step of (C) polymerizing a portion of the tetrafluoroethylene to form particles of polymerized tetrafluoroethylene in the reaction mixture. In (C), polymerizing a portion of the tetrafluoroethylene means an amount of tetrafluoroethylene less than the total amount combined with water in (A) to form the reaction mixture.

In another embodiment, to determine that a portion of the tetrafluoroethylene has polymerized and formed particles of polymerized tetrafluoroethylene in the reaction mixture, the total pressure within the vessel containing the reaction mixture is monitored. A tetrafluoroethylene pressure drop following initiation (B) indicates that polymerization of tetrafluoroethylene has begun and particles of polymerized tetrafluoroethylene have been formed (i.e., kickoff). In another embodiment, the pressure drop is at least about 35 KPa (5 psi). In another embodiment, the pressure drop is at least about 70 KPa (10 psi). In another embodiment, proof that polymerization of a portion of the tetrafluoroethylene has been achieved is that the reactor continues to consume tetrafluoroethylene, observed for example by the activation of a tetrafluoroethylene feed valve attached by a feedback control loop.

In another embodiment, the pressure drop represents about a 0.1 weight percent solids polymerized tetrafluoroethylene based on the water phase of the reaction mixture. Below such a solids level it is uncertain whether the polymerization has established itself enough to avoid being quenched by (D) addition to the reaction mixture of FG. In another embodiment, (C) polymerizing a portion of the tetrafluoroethylene to form particles of polymerized tetrafluoroethylene is carried out until about 2 weight percent solids polymer has been formed based on the water phase of the reaction mixture. This represents a small portion of the final batch size, typically less than about 5 percent of the total polymer to be made. Waiting until higher levels of polymer has been formed in (C) does not give additional benefit to establishing the polymerization, and might begin to make the reaction mixture unnecessarily nonhomogeneous.

In a suspension or granular PTFE type polymerization embodiment, the 0.1 to 2 weight percent solids polymerized tetrafluoroethylene is in the form of small irregular spongy polymer particles of indeterminate size and shape, nonwater wetted, and floating on the surface of the reaction mixture where they are available for direct polymer-vapor space polymerization. As the polymerization proceeds, more polymer particles are formed and the ones already in existence become larger. The size and shape of the polymer particles depend on the details of the polymerization. In another embodiment, suspension polymerization particles formed early in the batch have the size and shape of popped popcorn that has been rolled and crushed by hand. In another embodiment, suspension polymerization particles formed early in the batch have the size and shape of shredded coconut from the grocery store. In another embodiment, suspension polymerization particles formed early in the batch have the appearance and texture of powdered sugar.

In a dispersion polymerization embodiment, wherein surfactant is further added to the reaction mixture and the reaction mixture comprises a colloidally stable aqueous dispersion, the 0.1 to 1 weight percent polymerized tetrafluoroethylene is in the form of the initial particles made sometime during initiation of polymerization. After tetrafluoroethylene pressure drop following initiation, the presence of the colloidally stable particles inhibits formation of more particles by sweeping the aqueous reaction mixture phase of colloidally unstable precursor particles before the precursors have a chance to grow large enough to become colloidally stable themselves.

In another embodiment of this step of (C) polymerizing a portion of the tetrafluoroethylene to form particles of polymerized perfluoromonomer, there are about 10¹² particles of polymerized tetrafluoroethylene per gram of water in the reaction mixture. Fewer particles than that and the particles can undesirably become too large at too low a percent solids to be colloidally stable, resulting in coagulum problems. The value of 10¹² particles per gram of water in the reaction mixture is calculated for a polymerization with RDPS of 400 nm at 10% solids as a lower limit of industrial practicality. In another embodiment, particles have an RDPS of 300 nm or less at 20% solids or greater.

### 6.3.1. REGULATING THE RATE OF POLYMERIZATION

There are several alternatives for regulating the rate of polymerization. It is common with most alternatives first to precharge at least a portion of the modifier if used, and then to add tetrafluoroethylene to the desired total pressure. Additional tetrafluoroethylene is then added after initiation and polymerization kickoff to maintain a chosen pressure, and additional modifier can be added, also. The tetrafluoroethylene can be added at a constant rate, with agitator speed changed as necessary to increase or decrease actual polymerization rate and thus to maintain constant total pressure. In a variant of this alternative, pressure can be varied to maintain constant reaction rate at constant tetrafluoroethylene feed rate and constant agitator speed. Alternatively, the total pressure and the agitator speed can both be held constant, with tetrafluoroethylene added as necessary to maintain the constant pressure. A third alternative is to carry out the polymerization in stages with variable agitator speed, but with steadily increasing tetrafluoroethylene feed rates. When modifiers are added during the reaction, it is convenient to inject them at a fixed rate. In another embodiment, the rate of modifier addition is uniform during a given phase of polymerization. However, one skilled in the art will appreciate that a wide variety of modifier addition programs can be employed. Thus, for example, a series of discrete modifier additions can be used. Such discrete additions can be in equal or varying amounts, and at equal or varying intervals. Other non-uniform programs for addition of modifier can be used.

### 6.4. ADDING TO THE REACTION MIXTURE A MONOMER HAVING A FUNCTIONAL GROUP AND A POLYMERIZABLE CARBON-CARBON DOUBLE BOND (D)

The total pressure above the reaction mixture is monitored. A pressure drop of at least about 35 KPa (5 psi), generally at least about 70 KPa (10 psi), occurring after initiation indicates that polymerization of tetrafluoroethylene has begun and particles of polymerized tetrafluoroethylene are being formed.

Following the pressure drop indicating that polymerization of tetrafluoroethylene has begun and particles of polymerized tetrafluoroethylene have formed, monomer having a functional group and a polymerizable carbon-carbon double bond (functional group monomer, or FG) is added to the reaction mixture. In another embodiment, FG is added to the reaction mixture in one aliquot. In another embodiment, FG is added to the reaction mixture continuously or periodically over the total period of polymerization.

Addition of FG to the polymerization aqueous reaction mixture following the pressure drop indicating that polymerization of tetrafluoroethylene has begun and particles of polymerized tetrafluoroethylene are being formed, has been discovered to lead to productive and controllable incorporation in the perfluoropolymer carbon-carbon backbone of repeating units arising from FG.

Precharging FG to the polymerization aqueous reaction mixture has been discovered to not lead to productive incorporation in the perfluoropolymer carbon-carbon backbone of repeating units arising from FG.

### 6.4.1. pH OF THE REACTION MIXTURE

In an embodiment, FG contains a carboxyl group capable of forming a carboxylic acid and/or a carboxylic acid anhydride, and the pH of the reaction mixture measured at 25°C is less than or equal to the pKₐ of the carboxylic acid of the FG during (C) polymerization of the tetrafluoroethylene to form particles of polymerized tetrafluoroethylene and (D) the addition of FG to the reaction mixture.

In another embodiment of the process, FG contains a cyclic dicarboxylic acid anhydride and/or a dicarboxylic acid capable of forming a cyclic dicarboxylic acid anhydride, and the pH of the reaction mixture measured at 25°C is less than or equal to the pKₐ₁ of the dicarboxylic acid of the FG during (C) polymerization of the tetrafluoroethylene to form particles of polymerized tetrafluoroethylene and (D) the addition of FG to the reaction mixture.

Controlling the pH of the aqueous polymerization process reaction mixture has been discovered to lead to productive incorporation in the perfluoropolymer carbon-carbon backbone of repeating units arising from FG. Without wishing to be bound by theory, it is believed that so controlling the pH of the aqueous polymerization process reaction mixture results in a sufficient concentration of FG being present in the phase of the reaction mixture containing reactive perfluoropolymer chain radicals.

In another embodiment of the process, the reaction mixture further comprises a strong acid for the purpose of controlling the pH of the reaction mixture measured at 25°C at less than or equal to the pKₐ of the carboxylic acid of the FG during (C) polymerization of the tetrafluoroethylene to form particles of polymerized tetrafluoroethylene and (D) the addition of FG to the reaction mixture. Strong acids of utility include any that will not impede the polymerization process, including inorganic or mineral acids (e.g., nitric acid) and organic acids (e.g., oxalic acid). In another embodiment, strong acid comprises those acids with a pKₐ of about 1 or less.

In another embodiment of the process, the reaction mixture further comprises an acidic buffer for the purpose of controlling the pH of the reaction mixture measured at 25°C at less than or equal to the pKₐ of the carboxylic acid of the FG during (C) polymerization of the tetrafluoroethylene to form particles of polymerized tetrafluoroethylene and (D) the addition of FG to the reaction mixture. Acidic buffers of utility include any that will not impede the polymerization process, for example, phosphate buffer.

For the purpose of these comparisons of reaction mixture pH with pKₐ (or pKₐ₁) of the carboxylic acid, pH is measured at 25°C.

### EXAMPLES

The concepts described herein will be further described in the following examples, which do not limit the scope of the invention described in the claims.

### EXAMPLE 1

A cylindrical, horizontal, water-jacketed, paddle-stirred, stainless steel reactor having a length to diameter ratio of about 1.5 and a water capacity of 10 gallons (37.9 L) was charged with 43.3 pounds (19.6 kg) of demineralized water, 2 g of oxalic acid, and 13 mL of a 30 wt % solution of ammonium perfluorohexylethylsulfonate surfactant in water. With the reactor paddle agitated at 46 rpm, the reactor was heated to 65°C, evacuated and purged three times with TFE. The reactor temperature then was increased to 80°C. After the temperature of the reactor contents had become steady at 80°C, TFE was added to the reactor to achieve a final pressure of 380 psig (2.72 MPa). Then 100 mL of freshly prepared aqueous initiator solution containing 0.17 wt % ammonium persulfate (APS) was charged into the reactor. After polymerization had begun as indicated by a 10 psi (70 KPa) drop in reactor pressure, additional TFE was added to the reactor at a rate of 24 pound (10.9 kg)/100 minutes. After 1 pound (0.45 kg) of TFE had been fed after kickoff, addition of an aqueous solution of 1 wt % mesaconic acid to the polymerization reaction mixture was started at 1 mL/minute and continued for the remainder of the batch. Also, 1000 mL of a solution of 3.15 wt % ammonium perfluorohexylethylsulfonate solution was injected at 25 mL/min. After 24 pounds (10.9 kg) of TFE had been added over a reaction period of 100 minutes, the reaction was terminated. At the end of the reaction period, the TFE and mesaconic acid solution feeds were stopped, and the reactor was slowly vented. After venting to nearly atmospheric pressure, the reactor was purged with nitrogen to remove residual monomer, and the dispersion was discharged from the reactor. After coagulation, the polymer was isolated by filtering and then drying in a 150°C convection air oven. The polymer had a raw dispersion particle size (RDPS) of 235 nm, an SSG as measured by ASTM D-4895 of 2.230 and a mesaconic acid content of 0.008 wt %. Note that not all of the activities described above in the general description or the examples are required, that a portion of a specific activity may not be required, and that one or more further activities may be performed in addition to those described. Still further, the order in which activities are listed are not necessarily the order in which they are performed.

In the foregoing specification, the concepts have been described with reference to specific embodiments. However, one of ordinary skill in the art appreciates that various modifications and changes can be made without departing from the scope of the invention as set forth in the claims below. Accordingly, the specification is to be regarded in an illustrative rather than a restrictive sense, and all such modifications are intended to be included within the scope of invention.

Benefits, other advantages, and solutions to problems have been described above with regard to specific embodiments. However, the benefits, advantages, solutions to problems, and any feature(s) that may cause any benefit, advantage, or solution to occur or become more pronounced are not to be construed as a critical, required, or essential feature of any or all the claims.

It is to be appreciated that certain features are, for clarity, described herein in the context of separate embodiments, may also be provided in combination in a single embodiment. Conversely, various features that are, for brevity, described in the context of a single embodiment, may also be provided separately or in any subcombination. Further, reference to values stated in ranges include each and every value within that range.

## Claims

1. A non-melt-flowable perfluoropolymer having a standard specific gravity of 2.14 to 2.30 as determined by ASTM D4894 or ASTM D4895 comprising repeating units arising from:
(a) tetrafluoroethylene; and
(b) a monomer having at least one functional group and a polymerizable carbon-carbon double bond,
wherein said at least one functional group is at least one selected from the group consisting of amine, amide, carboxyl, hydroxyl, phosphonate, sulfonate, nitrile, boronate and epoxide, and
wherein said non-melt-flowable perfluoropolymer has 0.001 to 0.01 weight percent of repeating units arising from said monomer having at least one functional group and a polymerizable carbon-carbon double bond.

2. The non-melt-flowable perfluoropolymer of claim 1, wherein said at least one functional group is a dicarboxylic acid anhydride group.

3. The non-melt-flowable perfluoropolymer of claim 1, wherein said at least one functional group is a dicarboxylic acid.

4. The non-melt-flowable perfluoropolymer of claim 1, further comprising 1 weight percent or less of repeating units arising from a perfluoromonomer other than tetrafluoroethylene.

5. The non-melt-flowable perfluoropolymer of claim 4, wherein said perfluoromonomer other than tetrafluoroethylene is at least one selected from the group consisting of chlorotrifluoroethylene (CTFE), hexafluoropropylene (HFP), perfluoro-2,2-dimethyl-1,3-dioxole (PDD), perfluoro-2-methylene-4-methyl- 1,3-dioxolane (PMD), perfluoro(methyl vinyl ether) (PMVE), perfluoro(ethyl vinyl ether) (PEVE), perfluoro(propyl vinyl ether) (PPVE), and perfluoro(butyl vinyl ether) (PBVE).

6. A paste extruded film comprising lubricant and the non-melt-flowable perfluoropolymer of claim 1.

7. A billet formed by compression molding said non-melt-flowable perfluoropolymer of claim 1.

## Patentansprüche

1. Nicht schmelzfließfähiges Perfluorpolymer, das ein spezifisches Standardgewicht von 2,14 bis 2,30, wie durch ASTM D4894 oder ASTM D4895 bestimmt, aufweist, und Wiederholungseinheiten umfasst, die entstehen aus:
(a) Tetrafluorethylen; und
(b) einem Monomer, das mindestens eine funktionelle Gruppe und eine polymerisierbare Kohlenstoff Kohlenstoff-Doppelbindung aufweist;
wobei die mindestens eine funktionelle Gruppe mindestens eine ist ausgewählt aus der Gruppe bestehend aus Amin, Amid, Carboxyl, Hydroxyl, Phosphonat, Sulfonat, Nitril, Boronat und Epoxid und
wobei das nicht schmelzfließfähige Perfluorpolymer 0,001 bis 0,01 Gewichtsprozent Wiederholungseinheiten aufweist, die aus dem Monomer entstehen, das mindestens eine funktionelle Gruppe und eine polymerisierbare Kohlenstoff-Kohlenstoff-Doppelbindung aufweist.

2. Nicht schmelzfließfähiges Perfluorpolymer nach Anspruch 1, wobei die mindestens eine funktionelle Gruppe eine Dicarbonsäureanhydridgruppe ist.

3. Nicht schmelzfließfähiges Perfluorpolymer nach Anspruch 1, wobei die mindestens eine funktionelle Gruppe eine Dicarbonsäure ist

4. Nicht schmelzfließfähiges Perfluorpolymer nach Anspruch 1, des Weiteren 1 Gewichtprozent oder weniger Wiederholungseinheiten umfassend, die aus einem Perfluormonomer entstehen, bei dem es sich nicht um Tetrafluorethylen handelt.

5. Nicht schmelzfließfähiges Perfluorpolymer nach Anspruch 4, wobei das Perfluormonomer, bei dem es sich nicht um Tetrafluorethylen handelt, mindestens eines ist ausgewählt aus der Gruppe bestehend aus Chlortrifluorethylen (CTFE), Hexafluorpropylen (HFP), Perfluor-2,2-dimethyl-1,3-dioxol (PDD), Perfluor-2-methylen-4-methyl-1,3-dioxolan (PMD), Perfluor(methylvinylether) (PMVE), Perfluor(ethylvinylether) (PEVE), Perfluor(propylvinylether) (PPVE) und Perfluor(butylvinylether) (PBVE).

6. Pastenextrudierte Folie umfassend ein Gleitmittel und das nicht schmelzfließfähige Perfluorpolymer nach Anspruch 1.

7. Stangenware, die durch Formpressen des nicht schmelzfließfähigen Perfluorpolymers nach Anspruch 1 gebildet wird.

## Revendications

1. Polymère perfluoré ne pouvant pas s'écouler à l'état fondu ayant une densité relative standard de 2,14 à 2,30, tel que déterminé par la norme ASTM D4894 ou ASTM D4895 comprenant des motifs de répétition issus de :
a) tétrafluoroéthylène ; et
b) un monomère ayant au moins un groupe fonctionnel et une double liaison polymérisable carbone-carbone,
dans lequel ledit au moins un groupe fonctionnel est au moins un groupe choisi parmi le groupe constitué du groupe amine, amide, carboxyle, hydroxyle, phosphonate, sulfonate, nitrile, boronate et époxyde, et
dans lequel ledit polymère perfluoré ne pouvant pas s'écouler à l'état fondu possède 0,001 à 0,01 pourcent en poids de motifs de répétition issus dudit monomère ayant au moins un groupe fonctionnel et une double liaison polymérisable carbone-carbone.

2. Polymère perfluoré ne pouvant pas s'écouler à l'état fondu selon la revendication 1, dans lequel ledit au moins un groupe fonctionnel est un groupe anhydride d'acide dicarboxylique.

3. Polymère perfluoré ne pouvant pas s'écouler à l'état fondu selon la revendication 1, dans lequel ledit au moins un groupe fonctionnel est un acide dicarboxylique.

4. Polymère perfluoré ne pouvant pas s'écouler à l'état fondu selon la revendication 1, comprenant en outre 1 pourcent en poids ou moins de motifs de répétition issus d'un monomère perfluoré autre que le tétrafluoroéthylène.

5. Polymère perfluoré ne pouvant pas s'écouler à l'état fondu selon la revendication 4, dans lequel ledit monomère perfluoré autre que le tétrafluoroéthylène est au moins un groupe choisi parmi le groupe constitué du chlorotrifluoroéthylène (CFTE), de l'hexafluoropropylène (HFP), du perfluoro-2,2-diméthyl-1,3-dioxole (PDD), du perfluoro-2-méthylène-4-méthyl-1,3-dioxolane (PMD), du perfluoro(éther de méthyl vinyle) (PMVE), perfluoro(éther d'éthyl vinyle) (PEVE), perfluoro(éther de propyl vinyle) (PPVE) et perfluoro(éther de butyl vinyle) (PBVE).

6. Fil extrudé d'une pâte comprenant le lubrifiant et le polymère perfluoré ne pouvant pas s'écouler à l'état fondu selon la revendication 1.

7. Bûchette formée par moulage par compression dudit polymère perfluoré ne pouvant pas s'écouler à l'état fondu selon la revendication 1.
